# EUROPEAN PATENT APPLICATION

(11) **EP 4 693 003 A1**
(43) Date of publication of application: **11.02.2026**
(21) Application number: 24800273.5
(22) Date of filing: 03.05.2024
(51) Int. Cl.: G06F 3/048, G06F 9/451

(54) **APPLICATION EXECUTION METHOD AND ELECTRONIC DEVICE SUPPORTING SAME**

(30) Priority: 03.05.2023 KR 20230057755
(71) Applicant: Samsung Electronics Co., Ltd., Suwon-si, Gyeonggi-do 16677 (KR)
(72) Inventor: LIM, Kiseop, Suwon-si, Gyeonggi-do 16677 (KR); HAN, Jihoon, Suwon-si, Gyeonggi-do 16677 (KR); LEE, Younsun, Suwon-si, Gyeonggi-do 16677 (KR); HAN, Yonggil, Suwon-si, Gyeonggi-do 16677 (KR)
(74) Representative: Gulde & Partner
(86) International application number: PCT/KR2024/006041
(87) International publication number: WO 2024/228592

(57) **Abstract**

An electronic device including memory which stores instructions, and at least one processor is described. The instructions, when executed by the at least one processor, may cause the electronic device to detect an execution event of an application which supports a web-based interface, obtain, from the memory, history information on a plurality of web pages accessed through the application, wherein the history information includes information on a first tab corresponding to a first web page and information on a second tab corresponding to a second web page, determine that the first tab is to be excluded from a graphic user interface of the application which indicates a history accessed through the application, based on the information on the first tab and the information on the second tab, and display the graphic user interface in which the second tab is included and the first tab is excluded.

## Description

### [Technical Field]

Embodiments of the disclosure relate to a method of executing an application and an electronic device supporting the method.

### [Background Art]

In response to the advance of digital convergence in which various information and communication technologies are combined, electronic devices provide various functions and/or various services associated with the functions. Accordingly, proposals are underway for technologies for improving performance of applications which are essential bases for operating functions and/or services of the electronic device. For example, an application based on a world wide web provides a tab to a graphic user interface of the application to support access to a web page associated with the tab and/or access switching between the web pages.

The aforementioned content may be provided as the prior art for aiding understanding of the disclosure. No claim or decision is made as to whether the aforementioned content is applicable as the conventional technology related to the disclosure.

### [Disclosure of Invention]

### [Solution to Problem]

An electronic device according to an embodiment of the disclosure may include memory which stores instructions, and at least one processor.

According to an embodiment of the disclosure, the instructions, when executed by the at least one processor, may cause the electronic device to detect an execution event of an application which supports a web-based interface, obtain, from the memory, history information on a plurality of web pages accessed through the application, wherein the history information includes information on a first tab corresponding to a first web page and information on a second tab corresponding to a second web page, determine that the first tab is to be excluded from a graphic user interface of the application which indicates a history accessed through the application, based on the information on the first tab and the information on the second tab, and display the graphic user interface in which the second tab is included and the first tab is excluded.

An application execution method according to an embodiment of the disclosure may include detecting an execution event of an application which supports a web-based interface, obtaining, from memory of an electronic device, history information on a plurality of web pages accessed through the application, wherein the history information includes information on a first tab corresponding to a first web page and information on a second tab corresponding to a second web page, determining that the first tab is to be excluded from a graphic user interface of the application which indicates a history accessed through the application, based on the information on the first tab and the information on the second tab, and displaying the graphic user interface in which the second tab is included and the first tab is excluded.

A computer readable non-transitory storage medium having a computer program stored thereon to execute an application execution method according to an embodiment of the disclosure is provided. The computer program may perform operations of detecting an execution event of an application which supports a web-based interface, obtaining, from memory of an electronic device, history information on a plurality of web pages accessed through the application, wherein the history information includes information on a first tab corresponding to a first web page and information on a second tab corresponding to a second web page, determining that the first tab is to be excluded from a graphic user interface of the application which indicates a history accessed through the application, based on the information on the first tab and the information on the second tab, and displaying the graphic user interface in which the second tab is included and the first tab is excluded.

### [Brief Description of Drawings]

FIG. 1 illustrates an electronic device in a network environment according to an embodiment;
FIG. 2 illustrates an example of a graphic user interface of an application according to an embodiment;
FIG. 3 illustrates components of an electronic device according to an embodiment;
FIG. 4 illustrates an example of a method of determining a target tab to be excluded from a graphic user interface of an application according to an embodiment;
FIG. 5 illustrates an example of a process for locking a tab in a graphic user interface of an application according to an embodiment;
FIG. 6 illustrates another example of a method of determining a target tab to be excluded from a graphic user interface of an application according to an embodiment;
FIG. 7 illustrates an example of a process for grouping tabs in a graphic user interface of an application according to an embodiment;
FIG. 8 illustrates another example of a process for grouping tabs in a graphic user interface of an application according to an embodiment;
FIG. 9 illustrates another example of a process for grouping tabs in a graphic user interface of an application according to an embodiment;
FIG. 10 illustrates another example of a method of determining a target tab to be excluded from a graphic user interface of an application according to an embodiment;
FIG. 11 illustrates an example of an entry point of a web page accessed through an application according to an embodiment;
FIG. 12 illustrates an example of a graphic user interface of an application of which a tab is excluded according to an embodiment;
FIG. 13 illustrates an example of determining a target tab not to be excluded from a graphic user interface of an application according to an embodiment; and
FIG. 14 illustrates an example of a web page accessed through a graphic user interface of an electronic device according to an embodiment.

With regard to the description of the drawings, the same or similar reference numerals may be used to refer to the same or similar components.

### [Best Mode for Carrying out the Invention]

Upon executing a web-based application, tabs corresponding to respective web pages accessed through previous execution of the application are provided to a graphic user interface of the application. However, when some of the accessed web pages are redundant in the previous execution of the application (or when the same Uniform Resource Location (URL) information is provided), the tabs corresponding to the respective web pages are also provided redundantly to the graphic user interface, which may have adverse effect on performance of the application and/or performance of an electronic device which executes the application.

For example, upon executing or ending the application, data on the redundant web pages and/or tabs is read or written unnecessarily for a memory of the electronic device, which may result in useless occupation of an available space of the memory or deterioration of a response rate of the electronic device with respect to the executing or ending of the application. In addition, for example, when the number of the redundant web pages and/or tabs exceeds a set threshold count, a web page accessed at a relatively preceding timing and a tab corresponding thereto are automatically excluded irrespectively of user's intention, which may impair user experience on operating the application and/or the electronic device.

Embodiments of the disclosure provide an application execution method and an electronic device supporting the method. In the method, redundant web pages and/or tabs are identified at the occurrence of an execution event of a web-based application, and a tab to be excluded from being provided in a graphic user interface of the application among the identified tabs is determined.

Hereinafter, various embodiments of the present disclosure are disclosed with reference to the accompanying drawings. However, the present disclosure is not intended to be limited by the various embodiments of the present disclosure to a specific embodiment and it is intended that the present disclosure covers all modifications, equivalents, and/or alternatives of the present disclosure provided they come within the scope of the appended claims and their equivalents.

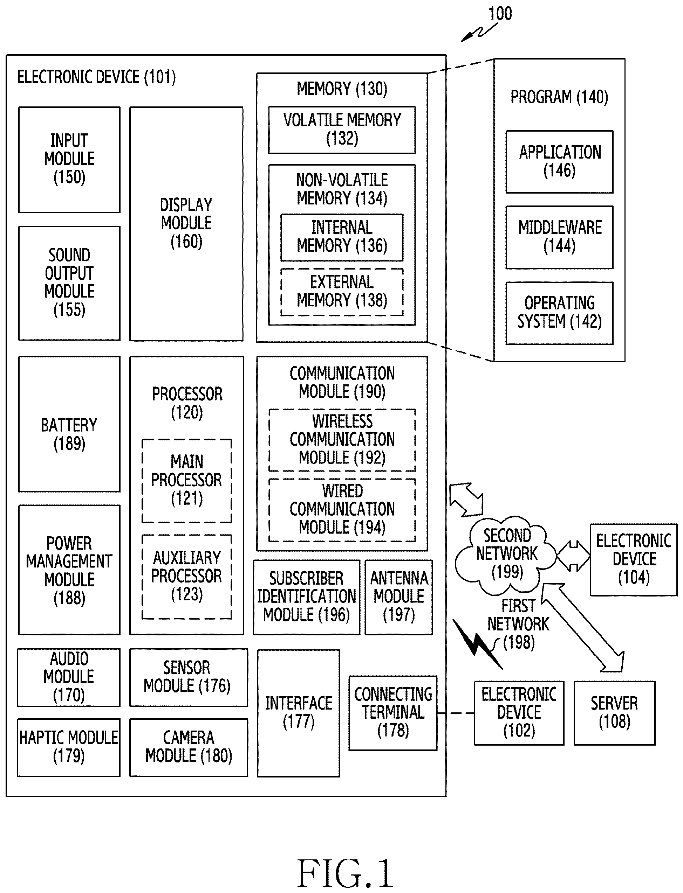

FIG. 1 illustrates an electronic device in a network environment according to an embodiment.

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

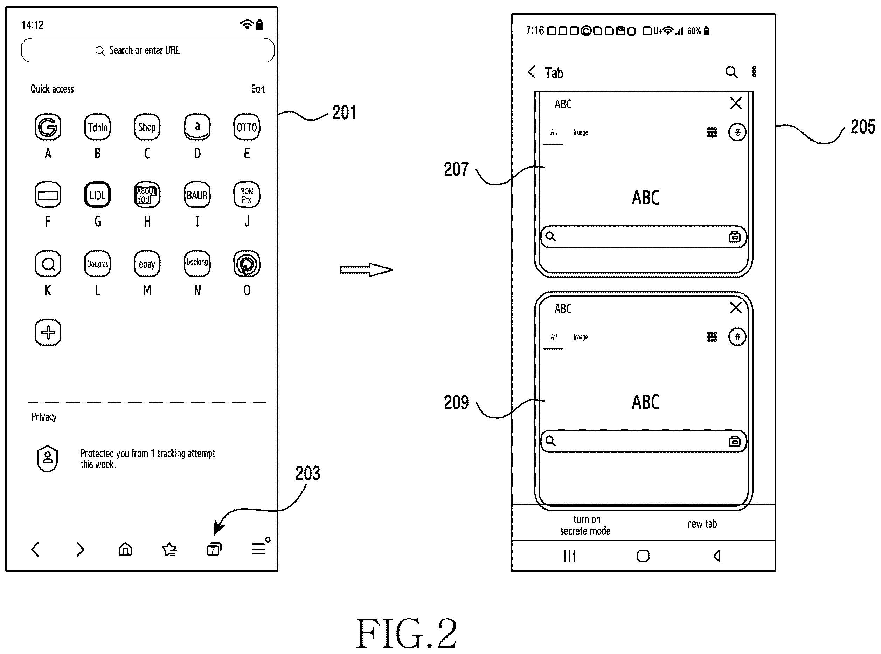

FIG. 2 illustrates an example of a graphic user interface of an application according to an embodiment.

Referring to FIG. 2, an electronic device according to an embodiment (e.g., the electronic device 101 of FIG. 1) may execute a web-based application to display a first graphic user interface 201 of the application. In an embodiment, a first visual object 203 for providing a history of at least one web page accessed (or open) through previous execution of the application may be included in one region of the first graphic user interface 201. For example, the first visual object 203 may be displayed by including a count of at least one tab indicating the web page accessed through the previous execution of the application. The electronic device 101 may switch the first graphic user interface 201 to a second graphic user interface 205 and then display it, based on receiving a user input on the first visual object 203.

In an embodiment, a tab indicating an accessed web page (or supporting access to the web page) through the previous execution of the application may be included in the second graphic user interface 205. For example, when a plurality of web pages are accessed through the previous execution of the application, a plurality of tabs 207 and 209 respectively corresponding to a plurality of web pages may be provided in the second graphic user interface 205. In various embodiments, the tab may be referred to as a window, a content window, or a navigation window.

In an embodiment, some of the plurality of web pages may correspond to each other. For example, a first web page corresponding to the first tab 207 and a second web page corresponding to the second tab 209 may correspond to each other. In one embodiment, a determination that the first web page and the second web page correspond to each other is based on a similarity of the URL information of the first web page and the second web page exceeding a threshold level. In this case, the first tab 207 and the second tab 209 may be provided redundantly in the second graphic user interface 205.

Hereinafter, various embodiments may be described in which, at the occurrence of an execution event of a web-based application, tabs to be excluded from being provided are determined among tabs to be provided redundantly through the second graphic user interface 205.

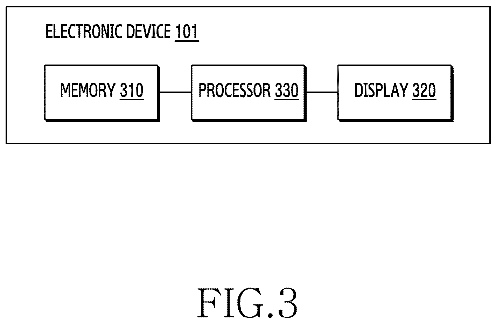

FIG. 3 illustrates components of an electronic device according to an embodiment.

Referring to FIG. 3, an electronic device 101 according to an embodiment (e.g., the electronic device 101 of FIG. 1) may include a memory 310 (e.g., the memory 130 of FIG. 1), a display 320 (e.g., the display module 160 of FIG. 1), and at least one processor 330 (e.g., the processor 120 of FIG. 1). In various embodiments, at least some of the aforementioned components may be omitted, or other additional components may be further included in the electronic device 101. For example, the electronic device 101 may further include a communication module (or a communication circuit) (e.g., the communication module 190 of FIG. 1) to communicate with at least one external server which provides a web hosting service. In addition, for example, the electronic device 101 may further include at least some of the components of the electronic device mentioned with reference to FIG. 1.

In an embodiment, the memory 310 may store at least one piece of data related to operating of the electronic device 101, or may store at least one instruction related to a functional operation of the components of the electronic device 101. For example, the memory 310 may store at least one web-based application. In an embodiment, the at least one application may include an application (e.g., a web browser) which is installed in a preloaded manner when the electronic device 101 is manufactured and/or an application (e.g., a web application) which is downloaded in a third party manner from an online market. In addition, the memory 310 may store history information (or data) on at least one web page accessed when the at least one application is executed, at a timing of ending the execution of the at least one application. According to an embodiment, the history information on the at least one web page may include information on the web page accessed when the application is executed and information on a tab created in relation to the web page.

In an embodiment, the display 320 may be exposed at least in part to the outside of the electronic device 101 to visually provide a variety of content. For example, the display 320 may display various graphic user interfaces provided by the electronic device 101 and/or the at least one application. In addition, for example, the display 320 may display a web page accessible through the execution of the at least one application.

In an embodiment, the at least one processor 330 may execute programing language code (e.g., instructions) stored in the memory 310 to control various functions or operations of the electronic device 101. For example, the at least one processor 330 may be electrically coupled to the components of the electronic device 101 to transfer (or transmit) to a related component at least one instruction, signal, and/or data accompanied for execution of functions or operations of the electronic device 101. In addition, for example, the at least one processor 330 may determine at least one tab which is to be excluded from being provided (or displayed) in a graphic user interface of the at least one application, based on detecting an execution event of the at least one web-based application. In an embodiment, the at least one processor 330 may obtain, from the memory 310, information (or data) used to determine at least one tab which is to be excluded from being provided and analyze the information, and may control the display 320 to display a graphic user interface of the application of which the determined at least one tab is excluded.

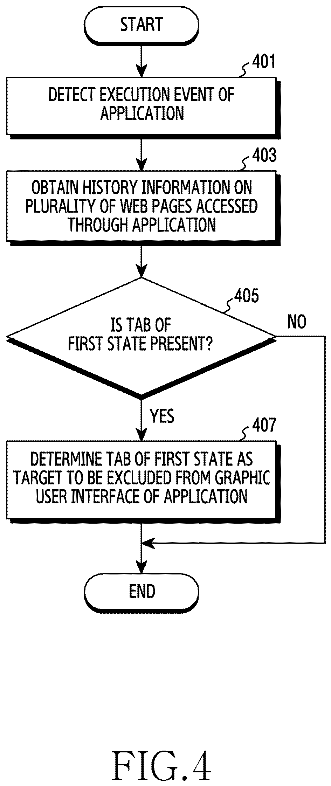

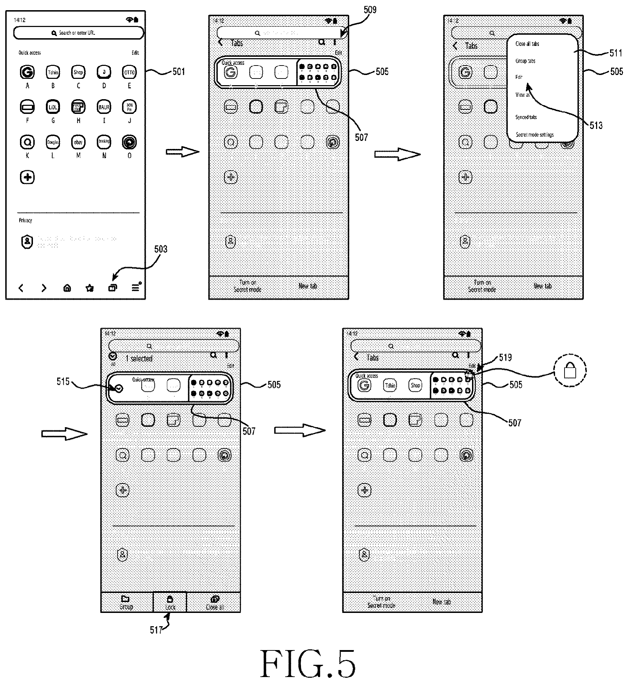

FIG. 4 illustrates an example of a method of determining a target tab to be excluded from a graphic user interface of an application according to an embodiment. FIG. 5 illustrates an example of a process for locking a tab in a graphic user interface of an application according to an embodiment.

Hereinafter, an embodiment of FIG. 5 may be referred together with an embodiment of FIG. 4 is described. In addition, operations of an electronic device mentioned in an embodiment of FIG. 4 may be performed sequentially, but may be not necessarily performed sequentially. For example, orders of the operations mentioned in the embodiment of FIG. 4 may be changed, and at least two operations may be performed in parallel.

Referring to FIG. 4, in operation 401, an electronic device according to an embodiment (e.g., the electronic device 101 of FIG. 2) may detect an execution event of an application. For example, the electronic device 101 may detect the execution event, i.e., the launching or starting, of the application which supports a web-based application and is stored in a memory (e.g., the memory 310 of FIG. 2). In an embodiment, the electronic device 101 may determine that the execution event of the application has occurred, based on receiving (or detecting) at least one of a touch input on an icon indicating the application, a voice input for uttering a keyword defined in relation to execution of the application, and a gesture input defined in relation to execution of the application.

In operation 403, the electronic device 101 according to an embodiment may obtain history information on a plurality of web pages accessed through an application in which the execution event is detected. In relation thereto, the electronic device 101 may store in the memory 310 the history information on the web pages accessed in previous execution of the application, based on detecting an end event, i.e., the termination or closing, for the previous execution of the application. In addition, the electronic device 101 may obtain (or receive) the stored history information from the memory 310 upon detecting the execution event of the application.

In an embodiment, the history information may include information on tabs created in correspondence with the respective web pages accessed in the previous execution of the application. For example, the history information may include information of a first tab created in correspondence with a first web page. The information on the first tab may include at least one of Uniform Resource Location (URL) information on the first web page, access time information, entry point information, and content information, and may include state information of the first tab.

In operation 405, the electronic device 101 according to an embodiment may determine whether a tab of a first state is present. For example, the electronic device 101 may determine whether a tab having a first state of not being locked according to user setting is present among the tabs created in the previous execution of the application, based on the history information (e.g., state information of the tab) obtained from the memory 310. Regarding the locking of the tab, an embodiment of FIG. 5 may be referred hereinafter.

Referring to FIG. 5, the electronic device 101 according to an embodiment may lock at least some of the created tabs, based on a series of user inputs on a graphic user interface of an application. For example, the electronic device 101 may display a second graphic user interface 505 which provides a history of a web page accessed through execution of the application, based on a user input on a first visual object 503 included in a first graphic user interface 501 of the application. In an embodiment, a tab 507 corresponding to the accessed web and a second visual object 509 supporting setting of the tab may be included in the second graphic user interface 505. In an embodiment, the electronic device 101 may provide a first window 511 related to the setting, based on a user input on the second visual object 509. Based on a user input on a menu 513 (edit) indicating editing of the tab on the first window 511, the electronic device 101 may request a user to select the target tab to be edited. In an embodiment, based on a user input for selecting the target tab 507 to be edited (see 515) and a user input on a third visual object 517 indicating locking of the selected tab 507, the electronic device 101 may lock the selected tab 507 and display a fourth visual object 519 indicating the locking in one region of the tab 507. In exemplary embodiments, locking a selected tab 507 prevents the selected tab 507 from being closed, in other words by locking a selected tab 507, the selected tab 507 will be included in the graphic user interface of an application according to an embodiment.

According to an embodiment, in operation 407, the electronic device 101 may determine tabs having the first state as a target to be excluded (e.g., a candidate to be excluded) from a graphic user interface (e.g., the second graphic user interface) displayed in the execution of the application, based on identifying a presence of tabs having a first state that is not locked among the tabs created in the previous execution of the application.

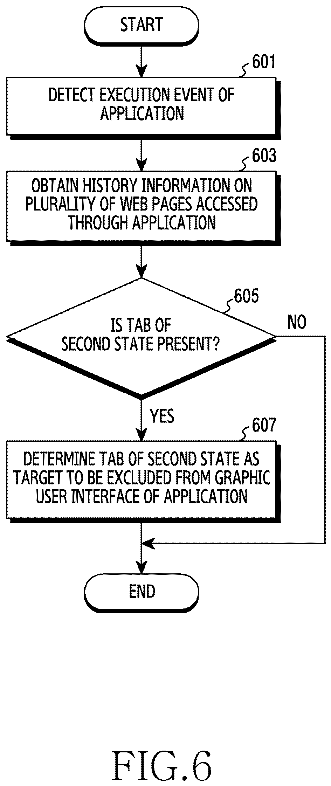

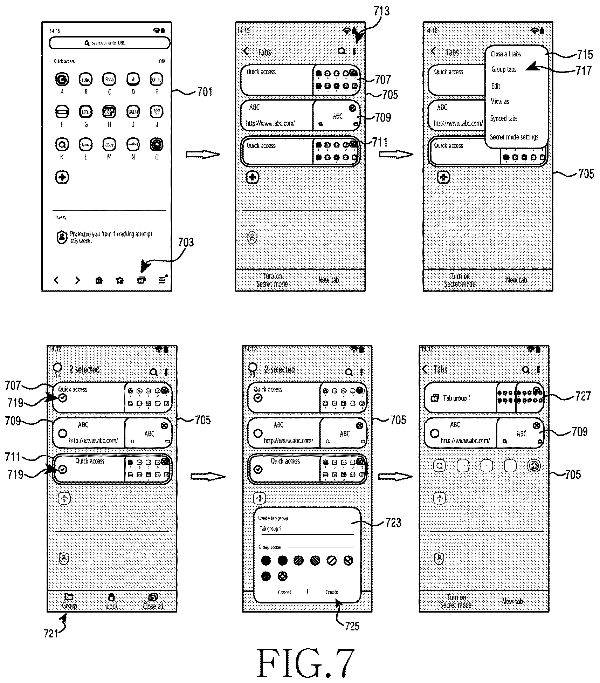

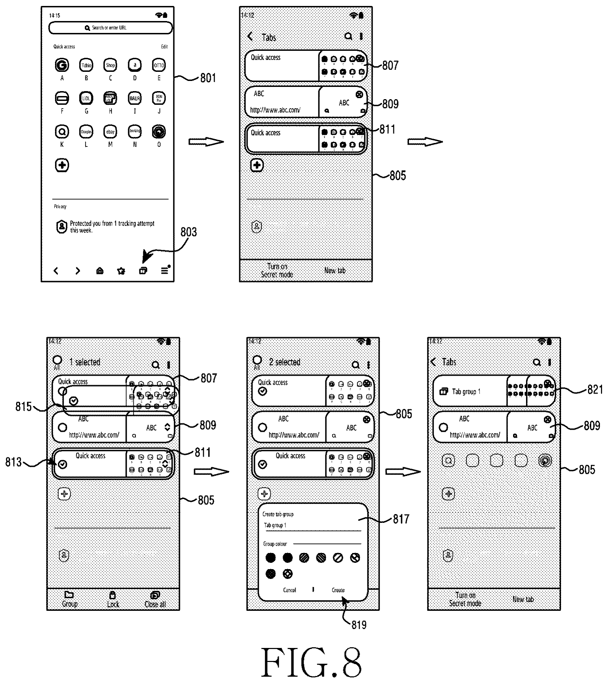

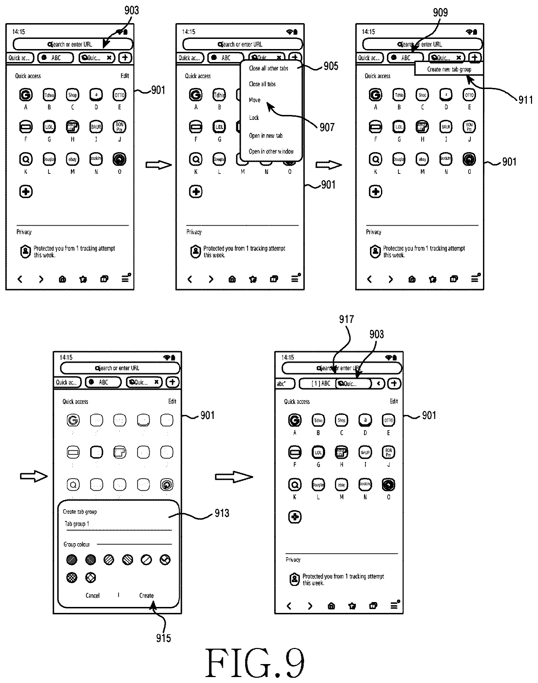

FIG. 6 illustrates another example of a method of determining a target tab to be excluded from a graphic user interface of an application according to an embodiment. FIG. 7 illustrates an example of a process for grouping tabs in a graphic user interface of an application according to an embodiment. FIG. 8 illustrates another example of a process for grouping tabs in a graphic user interface of an application according to an embodiment. FIG. 9 illustrates another example of a process for grouping tabs in a graphic user interface of an application according to an embodiment.

Hereinafter, embodiments of FIG. 7, FIG. 8, and FIG. 9 may be referred together when an embodiment of FIG. 6 is described. In addition, operations of an electronic device mentioned in an embodiment of FIG. 6 may be performed sequentially, but may be not necessarily performed sequentially. For example, orders of the operations mentioned in the embodiment of FIG. 6 may be changed, and at least two operations may be performed in parallel.

Referring to FIG. 6, in operation 601, an electronic device according to an embodiment (e.g., the electronic device 101 of FIG. 2) may detect an execution event of an application. For example, the electronic device 101 may detect the execution event of the application which supports a web-based interface and is stored in a memory (e.g., the memory 310 of FIG. 2).

In operation 603, the electronic device 101 according to an embodiment may obtain history information on a plurality of web pages accessed through an application in which the execution event is detected. For example, the electronic device 101 may obtain (or receive) the history information from the memory 310, based on the detecting of the execution event of the application.

In operation 605, the electronic device 101 according to an embodiment may determine whether tabs having a second state are present. For example, the electronic device 101 may determine whether tabs having a second state of not grouped according to user setting are present among the tabs created in previous execution of the application, based on the history information (e.g., state information of the tab) obtained from the memory 310. Regarding the grouping of the tab, embodiments of FIG. 7, FIG. 8, and FIG. 9 may be referred hereinafter.

Referring to FIG. 7, FIG. 8, and FIG. 9, the electronic device 101 according to an embodiment may group at least some of the created tabs, based on a series of user inputs on a graphic user interface of an application.

Referring to FIG. 7, for example, the electronic device 101 may switch a first graphic user interface 701 to a second graphic user interface 705 which provides a history of a web page accessed through execution of the application and then display it, based on a user input on a first visual object 703 included in a first graphic user interface 701 of the application. In an embodiment, tabs 707, 709, and 711 respectively corresponding to the accessed web pages and a second visual object 713 supporting setting for the tabs may be included in the second graphic user interface 705. In an embodiment, the electronic device 101 may provide a first window 715, based on a user input on the second visual object 713, and may request a user to select target tabs to be grouped, based on a user input on a menu 717 (group tabs) which indicates grouping of the tabs on the first window 715. In an embodiment, the electronic device 101 may provide a second window 723, based on a user input for selecting the target tabs 707 and 711 to be grouped (see 719) and a user input on a fifth visual object 721 which indicates grouping of the selected tabs 707 and 711. In an embodiment, the electronic device 101 may receive through the second window 723 a user input for setting details on a group tab which includes the selected tabs 707 and 711 (e.g., a name of a group tab and/or a graphic effect applied to the group tab) and a user input on a menu 725 (create) indicating creation of the group tab. In an embodiment, the electronic device 101 may create a group tab which includes the selected tabs 707 and 711, based on a user input on the menu 725, and may provide the second graphic user interface 705 of the application with a group tab 727 and the tab 709, which is not part of a group.

In addition, referring to FIG. 8, for example, the electronic device 101 may display a second graphic user interface 805 including tabs 807, 809, and 811 corresponding to respective web pages accessed through execution of the application, based on a user input on the first visual object 803 included in a first graphic user interface 801 of the application. According to an embodiment, based on a first user input (e.g., a long press input longer than a designated time) on the first tab 811 among the tabs 807, 809, and 811, the electronic device 101 may visually represent selection of the first tab 811 (see 813), and thereafter, based on a second user input (e.g., a drag input) on the first tab 811, may move a location of the first tab 811 along a path of the second user input to at least partially overlap with tab 807, thereby indicating a desire to group tab 811 and tab 807. According to an embodiment, the electronic device 101 may display a second window 817 in the second graphic user interface 805, based on detecting release of the second user input in a state where the first tab 811 of which a location moves overlaps at least in part with the second tab 807 by more than a designated ratio. In an embodiment, the electronic device 101 may receive through the second window 817 a user input for setting details on a group tab which includes the overlapping tabs 811 and 807 (e.g., a name of a group tab and/or a graphic effect applied to the group tab) and a user input on a menu 819 (create) indicating creation of the group tab. In an embodiment, the electronic device 101 may create a group tab 821 which includes the overlapping tabs 811 and 807, based on a user input on the menu 819, and may provide the second graphic user interface 805 of the application with a group tab 821 and tab 809, which is not part of a group.

In addition, referring to FIG. 9, for example, bar-shaped tabs corresponding to respective web pages accessed through execution of the application may be provided in one region of a first graphic user interface 901 of the application. In an embodiment, the electronic device 101 may provide a third window 905 related to setting of the tabs, based on a first user input (e.g., a long press input longer than a designated time) on a first tab 903 among the bar-shaped tabs, and may display a menu 911 (create new tab group) indicating creation of a group tab, based on a user input on a menu 907 (move) indicating location movement of a tab on the third window 905. According to an embodiment, the electronic device 101 may receive a user input on the menu 911 indicating creation of the group tab, or may receive a second user input (e.g., a drag input) on the first tab 903 irrespective of the menu 911. According to an embodiment, the electronic device 101 may display a second window 913, based on the user input on the menu 911 indicating creation of the group tab or based on detecting release of the second user input in a state where the first tab 903 of which a location moves along a path of the second user input overlaps at least in part with a bar-shaped second tab 909 by more than a designated ratio. In an embodiment, the electronic device 101 may receive through the second window 913 a user input for setting details on a group tab which includes only the first tab 903 (e.g., a name of a group tab and/or a graphic effect applied to the group tab) and a user input on a menu 915 (create) indicating creation of the group tab 917. In an embodiment, the electronic device 101 may create a group tab (not shown) including only the first tab 903 or a group tab 917 including the overlapping tabs 903 and 909, based on a user input on the menu 915, and may provide it to the first graphic user interface 901 of the application.

According to an embodiment, in operation 607, the electronic device 101 may determine tabs having the second state as a target to be excluded (e.g., a candidate to be excluded) from a graphic user interface (e.g., the second graphic user interface) displayed upon executing the application, based on identifying a presence of the tabs have a second state of not grouped among the tabs created in previous execution of the application. In other words, tabs that are identified as not belonging to a previously defined group of tabs are identified as tabs that can be excluded from the graphic user interface displayed upon executing the application.

Although not shown, according to various embodiments, based on identifying a presence of tabs of a third state of being grouped among the tabs created in the previous execution of the application, the electronic device 101 may determine at least some of tabs among the tabs having the third state (e.g., grouped tabs) as the target to be excluded from the graphic user interface. For example, first and second tabs among the third state tabs included in the group tab may correspond to respective web pages which are identical to each other. In this case, the first tab and the second tab may be provided redundantly in the group tab.

In an embodiment, the electronic device 101 may identify an entry point for web pages associated with respective tabs in the group tab, based on history information (e.g., entry point information of the web page) obtained from the memory 310, in order to determine an identity between at least some of the tabs in the group tab. According to an embodiment, the entry point of the web page may be referred to as an access path (or an entry path) for a plurality of web pages including a corresponding web page. For example, when a second web page is accessed through a first web page and a third web page is accessed through the second web page, the entry point of the first web page may mean an access path from the first web page to the third web page. In various embodiments, the entry point for the first web page when the second web page is accessed through the first web page and the third web page is accessed through the second web page may be interpreted to be different from the entry point for the first web page when the third web page is accessed through the first web page and the second web page is accessed through the third web page. In various embodiments, when a web page different from the first web page is not accessed (or entered) through the first web page, it may be interpreted that the entry point (or a browsing history) for the first web page is not present.

In an embodiment, based on identifying web pages not having the entry point, the electronic device 101 may identify URL information of each of corresponding web pages. For example, the electronic device 101 may identify URL information of the web pages not having the entry point, based on history information (e.g., the URL information of the web page) obtained from the memory 310. According to an embodiment, in the presence of the web pages including the same URL information among the web pages not having the entry point, the electronic device 101 may identify access time information of each of corresponding web pages, based on the history information (e.g., access time information of the web page). In an embodiment, the electronic device 101 may exclude a web page having most recent access time information among the web pages including the same URL information, and may determine at least one tab corresponding to the remaining at least one web page as a target to be excluded from the graphic user interface of the application.

Based on the aforementioned description, the electronic device 101 may identify tabs of respective web pages not having the entry point and having the same URL information among the third state tabs included in the group tab, and may determine at least one tab corresponding to at least one web page having relatively preceding time information among the identified tabs as a target to be excluded from the graphic user interface of the application.

In an embodiment, based on identifying web pages having the same entry point, the electronic device 101 may identify URL information of each of corresponding web pages. In an embodiment, in the presence of web pages including the same URL information among the web pages having the same entry point, the electronic device 101 may identify access time information for each of corresponding web pages, based on history information (e.g., access time information of the web page) obtained from the memory 310. In an embodiment, the electronic device 101 may exclude a web page having most recent access time information among the web pages including the same URL information, and may determine at least one tab corresponding to the remaining at least one web page as a target to be excluded from the graphic user interface of the application.

Based on the aforementioned description, the electronic device 101 may identify tabs of respective web pages having the same entry point and the same URL information among the third state tabs included in the group tab, and may determine at least one tab corresponding to at least one web page having relatively preceding time information among the identified tabs as a target to be excluded from the graphic user interface of the application.

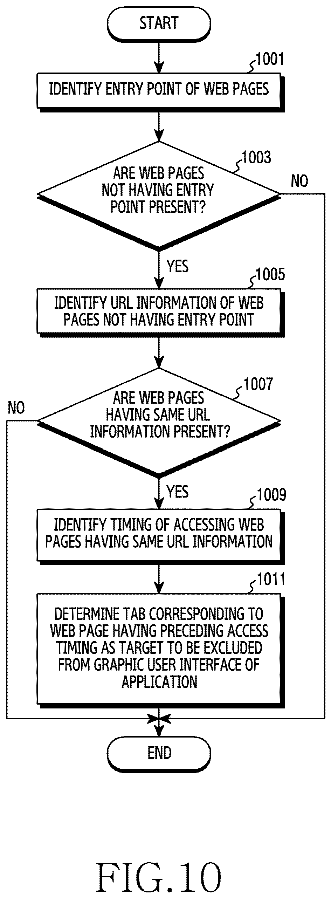

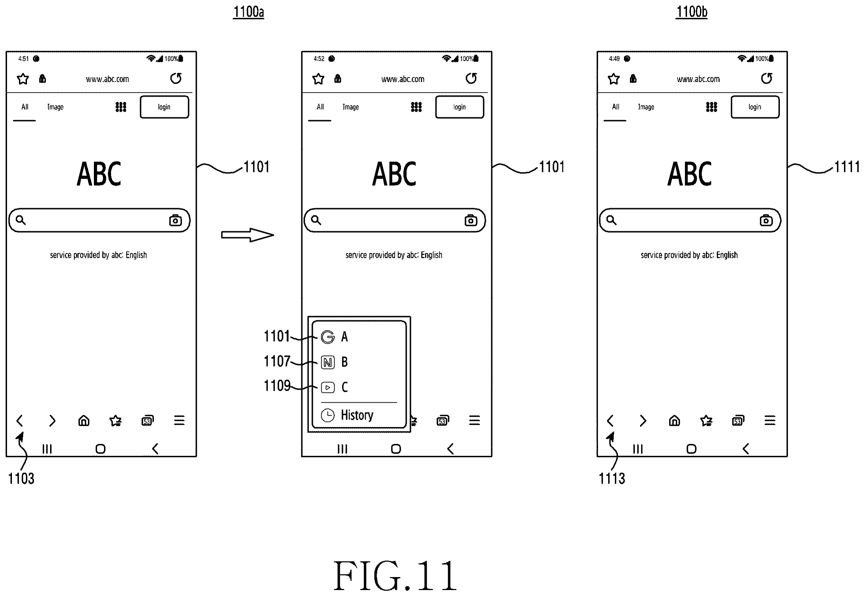

FIG. 10 illustrates another example of a method of determining a target tab to be excluded from a graphic user interface of an application according to an embodiment. FIG. 11 illustrates an example of an entry point of a web page accessed through an application according to an embodiment.

Hereinafter, an embodiment of FIG. 11 may be referred to together when an embodiment of FIG. 10 is described. In addition, operations of an electronic device mentioned in an embodiment of FIG. 10 may be performed sequentially, but may be not necessarily performed sequentially. For example, orders of the operations mentioned in the embodiment of FIG. 10 may be changed, and at least two operations may be performed in parallel.

In addition, operations of the electronic device mentioned in an embodiment of FIG. 10 may be performed on tabs determined as a target to be excluded (e.g., a candidate to be excluded) in a graphic user interface of an application according to the aforementioned embodiment of FIG. 4 and embodiment of FIG. 6. For example, operations of the electronic device mentioned in an embodiment of FIG. 10 may be performed on tabs having a first state of not being locked and also having a second state of not being grouped among tabs created in previous execution of the application.

Referring to FIG. 10, in operation 1001, an electronic device according to an embodiment (e.g., the electronic device 101 of FIG. 2) may identify an entry point of web pages corresponding to respective tabs, based on determining the tabs having a first state of not being locked and also having a second state of not being grouped. For example, the electronic device 101 may identify an entry point for respective web pages having the first state and the second state, based on history information (e.g., entry point information of the web page) obtained from a memory (e.g., the memory 310 of FIG. 2). Regarding the entry point of the web page, an embodiment of FIG. 11 may be referred hereinafter.

Referring to FIG. 11, a sixth visual object supporting navigation (or entry) to at least one different web page accessed (or opened) through the web page may be provided in one region of the web page.

For example, a sixth visual object 1103 having a first visual effect (e.g., a first color) may be provided in one region of a first web page 1101 in which an entry point is present (see 1100a), and the sixth visual object 1103 may support forward movement and/or backward movement from the first web page 1101. In an embodiment, the electronic device 101 may visually provide an access path (or an entry path) according to the entry point of the first web page 1101, based on a first user input (e.g., a long press input longer than a designated time) on the sixth visual object 1103 having the first visual effect. For example, when a second web page is accessed through the first web page and a third web page is accessed through the second web page, the electronic device 101 may provide a list in which identification information of the first web page 1101, identification information of a second web page 1107, and identification information of a third web page 1109 are sequentially enumerated in a region adjacent to the sixth visual object 1103 in correspondence with the first user input.

In addition, for example, a sixth visual object 1113 having a second visual effect (e.g., a second color) may be provided in one region of a first web page 1111 not having the entry point (see 1100b). In an embodiment, since there is no entry point of the first web page 1111, the sixth visual object 1113 of the second visual effect may not support forward movement or backward movement from the first web page 1111.

In operation 1003, the electronic device 101 according to an embodiment may determine whether there are web pages not having an entry point among web pages corresponding to respective tabs having the first state of not being locked and having a second state of not being grouped.

According to an embodiment, the electronic device 101 may identify URL information of each of the identified web pages in operation 1005, based on identifying the presence of web pages not having an entry point among web pages of tabs having the first state of not being locked and the second state of not being grouped. For example, the electronic device 101 may identify URL information of web pages not having an entry point, based on history information (e.g., URL information of the web page) obtained from the memory 310.

In operation 1007, the electronic device 101 according to an embodiment may determine whether web pages including the same URL information are present among the web pages not having an entry point among web pages of tabs having the first state of not being locked and the second state of not being grouped.

According to an embodiment, the electronic device 101 may identify access time information for each of corresponding web pages in operation 1009, based on identifying the presence of web pages including the same URL information among the web pages not having an entry point. For example, the electronic device 101 may identify access time information for each of the web pages including the same URL information, based on history information (e.g., access time information of the web page) obtained from the memory 310.

In operation 1011, the electronic device 101 according to an embodiment may determine at least one tab corresponding to at least one web page having a relatively preceding access timing as a target to be excluded from a graphic user interface of an application to be executed. For example, the electronic device 101 may exclude a web page having most recent access time information among the web pages including the same URL information, and may determine at least one tab corresponding to the remaining at least one web page as a target to be excluded from the graphic user interface.

Based on the aforementioned description, the electronic device 101 may identify tabs corresponding to respective web pages not having the entry point and having the same URL information among the tabs having the first and second states, and may determine at least one tab corresponding to at least one web page having relatively preceding time information among the web pages as the target to be excluded from the graphic user interface of the application.

Although not shown, according to various embodiments, based on identifying web pages having the same entry point among web pages corresponding to respective tabs having the first state of not being locked and also having the second state of not being grouped, the electronic device 101 may identify URL information of each of corresponding web pages. In an embodiment, in the presence of web pages including the same URL information among the web pages having the same entry point, the electronic device 101 may identify access time information for each of corresponding web pages, based on history information (e.g., access time information of the web page) obtained from the memory 310. In an embodiment, the electronic device 101 may exclude a web page having most recent access time information among the web pages having the same URL information, and may determine at least one tab corresponding to the remaining at least one web page as the target to be excluded from the graphic user interface of the application.

Based on the aforementioned description, the electronic device 101 may identify tabs of respective web pages having the same entry point and the same URL information among the tabs having the first and second states, and may determine at least one tab corresponding to at least one web page having relatively preceding time information among the web pages having the same entry point and the same URL information as the target to be excluded from the graphic user interface of the application.

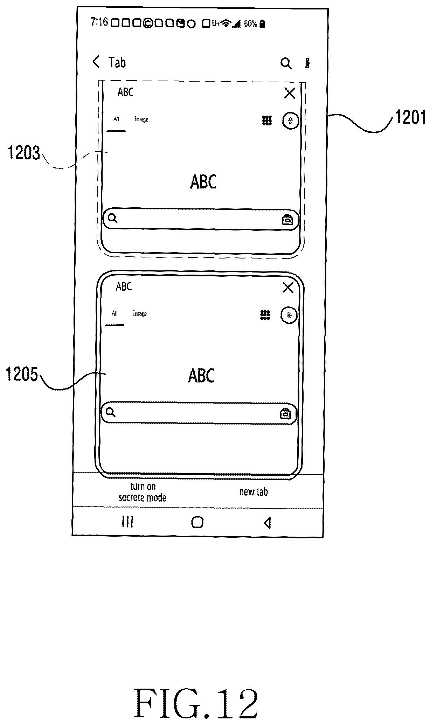

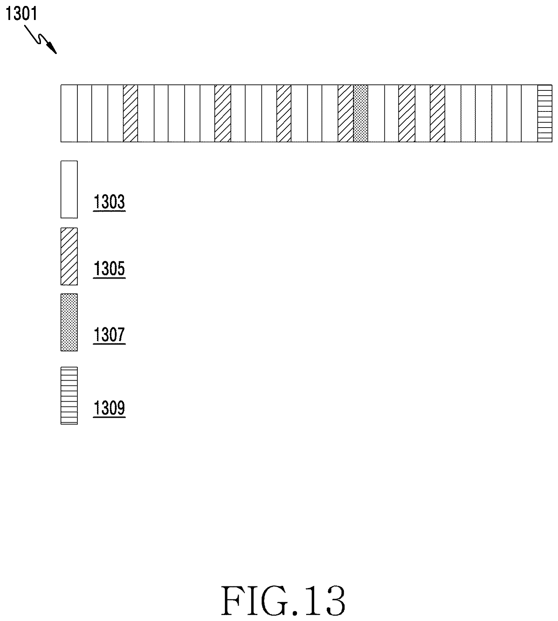

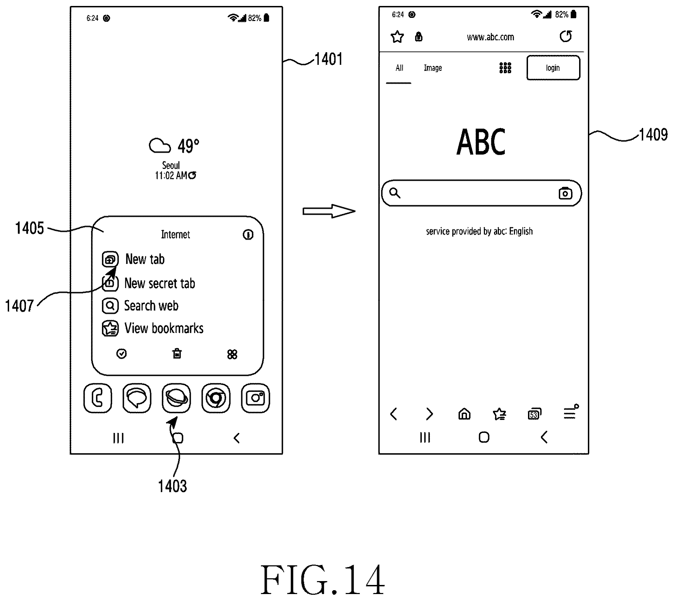

FIG. 12 illustrates an example of a graphic user interface of an application of which a tab is excluded according to an embodiment. FIG. 13 illustrates an example of determining a target tab not to be excluded from a graphic user interface of an application according to an embodiment. FIG. 14 illustrates an example of a web page accessed through a graphic user interface of an electronic device according to an embodiment.

Referring to FIG. 12, upon executing a web-based application, an electronic device according to an embodiment (e.g., the electronic device 101 of FIG. 2) may display a second graphic user interface 1201 of the application, based on a user input. For example, the electronic device 101 may display the second graphic user interface 1201, based on a user input for a first visual object (e.g., the first visual object 203 of FIG. 2) provided to a first user interface (e.g., the first user interface 201 of FIG. 2) of the application. In an embodiment, the second graphic user interface 1201 may provide a history of a web page accessed through previous execution of the application, and the history of the web page may be provided through a tab corresponding to the web page.

In an embodiment, the electronic device 101 may determine a tab which is to be excluded from being displayed in the second graphic user interface upon executing the application, based on detecting an execution event of the application. For example, the electronic device 101 may identify tabs corresponding to respective web pages not having the entry point and including the same URL among tabs having a first state of not being locked and a second state of not being grouped, and may determine at least one tab corresponding to at least one web page accessed at a relatively preceding timing among the identified tabs as a target to be excluded from being displayed. In addition, for example, the electronic device 101 may identify tabs corresponding to respective web pages having the same entry point and the same URL information among the tabs having the first state of not being locked and the second state of not being grouped, and may determine the at least one tab corresponding to the at least one web page accessed at the relatively preceding timing among the identified tabs as the target to be excluded from being displayed. In addition, for example, the electronic device 101 may identify tabs corresponding to respective web pages not having the entry points and including the same URL among tabs having a third state of being grouped, and may determine at least one tab corresponding to at least one web page accessed at the relatively preceding timing among the identified tabs as the target to be excluded from being displayed. In addition, for example, the electronic device 101 may identify tabs corresponding to respective web pages having the same entry point and the same URL information among the tabs having the third state of being grouped, and may determine at least one tab corresponding to at least one web page accessed at the relatively preceding timing among the identified tabs as the target to be excluded from being displayed.

In an embodiment, in an operation of displaying the second graphic user interface 1201 of the application, based on a user input upon executing a web-based application, the electronic device 101 may exclude at least one tab 1203 determined as the target to be excluded, and may output the second graphic user interface 1201 including at least one tab 1205 which is not determined as the target to be excluded.

According to an embodiment, regarding at least one tab determined as the target to be excluded from being displayed in the second graphic user interface 1201, the electronic device 101 may further determine whether a corresponding tab has a fourth state. In an embodiment, a web page corresponding to the tab of the fourth state may configure a first execution screen of an application when the application is executed, based on a routine defined in the electronic device 101 or a web-based application. In an embodiment, when at least one tab determined as the target to be excluded from being displayed has the fourth state, the electronic device 101 may not exclude a corresponding tab in the second graphic user interface. Referring to FIG. 13, for example, upon determining a plurality of tabs 1303 not to be excluded from being displayed and a plurality of tabs 1305 and 1307 to be excluded from being displayed and upon identifying the tab 1307 having the fourth state among the plurality of tabs 1305 and 1307 to be excluded from being displayed, the electronic device 101 may output a second graphic user interface 1301 including the plurality of tabs 1303 not to be excluded from being displayed and the tab 1307 of the fourth state. In exemplary embodiments, the fourth state includes a tab that is part of the application and that is utilized to configure a first execution screen of the application when the application is executed. For example, a tab of the fourth state may include a home screen or landing page of the application that allows a user to configure the first execution screen of the application.

In an embodiment, the electronic device 101 may support a function of accessing (or entering) a web page through a first user interface (e.g., a home screen) of the electronic device 101. Referring to FIG. 14, for example, the electronic device 101 may receive a first user input (e.g., a long press input longer than a designated time) on an icon 1403 of a web-based application in a first user interface 1401 of the electronic device 101. In an embodiment, the electronic device 101 may provide a fourth window 1405 to the first user interface 1401, based on the first user input, and may access a web page 1409 corresponding to a tab created based on a user input on a menu 1407 indicating creation of the tab on the fourth window 1405.

In an embodiment, the electronic device 101 may exclude the fourth-state tab determined as a target not to be excluded from being displayed, in the second graphic user interface of the application, based on accessing the web page 1409 through the first user interface 1401 of the electronic device 101. Referring to FIG. 13, for example, upon accessing the web page 1409 through the first user interface 1401 of the electronic device 101, the electronic device 101 may allow a tab 1309 corresponding to the web page 1409 to be included in the second graphic user interface 1301, and may exclude the fourth-state tab 1307, which has been determined as the target to be excluded from being displayed but is not excluded from being displayed since the tab has the fourth state, in the second graphic user interface 1301.

An electronic device according to an embodiment of the disclosure may include memory which stores instructions, and at least one processor.

According to an embodiment of the disclosure, the instructions, when executed by the at least one processor, may cause the electronic device to detect an execution event of an application which supports a web-based interface, obtain, from the memory, history information on a plurality of web pages accessed through the application, wherein the history information includes information on a first tab corresponding to a first web page and information on a second tab corresponding to a second web page, determine that the first tab is to be excluded from a graphic user interface of the application which indicates a history accessed through the application, based on the information on the first tab and the information on the second tab, and display the graphic user interface in which the second tab is included and the first tab is excluded.

According to an embodiment of the disclosure, the instructions, when executed by the at least one processor, may cause the electronic device to identify a first entry point of the first web page corresponding to the first tab. The first entry point may indicate an access path for a plurality of web pages including the first web page.

According to an embodiment of the disclosure, the instructions, when executed by the at least one processor, may cause the electronic device to identify first Uniform Resource Location (URL) information of the first web page and second URL information of the second web page, based on identifying that the first entry point and a second entry point of the second web page corresponding to the second tab are not present.

According to an embodiment of the disclosure, the instructions, when executed by the at least one processor, may cause the electronic device to identify a first timing of accessing the first web page and a second timing of accessing the second web page, based on identifying that the first URL information and the second URL information are identical, and determine the first tab as a target to be excluded from the graphic user interface, based on identifying that the first timing precedes the second timing.

According to an embodiment of the disclosure, the instructions, when executed by the at least one processor, may cause the electronic device to identify a first timing of accessing the first web page and a second timing of accessing the second web page, based on identifying that the first entry point and a second entry point of the second web page corresponding to the second tab are identical, and determine the first tab as a target to be excluded from the graphic user interface, based on identifying that the first timing precedes the second timing.

According to an embodiment of the disclosure, the instructions, when executed by the at least one processor, may cause the electronic device to determine the first tab as a target to be excluded from the graphic user interface, based on identifying that the first tab is in a first state of not being locked.

According to an embodiment of the disclosure, the instructions, when executed by the at least one processor, may cause the electronic device to determine the first tab as a target to be excluded from the graphic user interface, based on identifying that the first tab is in a second state of not being grouped with at least one third tab.

According to an embodiment of the disclosure, the instructions, when executed by the at least one processor, may cause the electronic device to identify the first entry point, based on identifying that the first tab is in a third state of being grouped with at least one third tab.

According to an embodiment of the disclosure, the instructions, when executed by the at least one processor, may cause the electronic device to identify first URL information of the first web page and third URL information of at least one third web page, based on identifying that the first entry point and a third entry point of the at least one third web page corresponding to the at least one third tab are not present.

According to an embodiment of the disclosure, the instructions, when executed by the at least one processor, cause the electronic device to identify a first timing of accessing the first web page and a third timing of accessing the at least one third web page, based on identifying that the first URL information and the third URL information are identical, and determine the first tab as a target to be excluded from the graphic user interface, based on identifying that the first timing precedes the third timing.

An application execution method according to an embodiment of the disclosure may include detecting an execution event of an application which supports a web-based interface, obtaining, from memory of an electronic device, history information on a plurality of web pages accessed through the application, wherein the history information includes information on a first tab corresponding to a first web page and information on a second tab corresponding to a second web page, determining that the first tab is to be excluded from a graphic user interface of the application which indicates a history accessed through the application, based on the information on the first tab and the information on the second tab, and displaying the graphic user interface in which the second tab is included and the first tab is excluded.

According to an embodiment of the disclosure, the determining of the first tab may include identifying a first entry point of the first web page corresponding to the first tab. The first entry point may indicate an access path for a plurality of web pages including the first web page.

According to an embodiment of the disclosure, the determining of the first tab may include identifying first URL information of the first web page and second URL information of the second web page, based on identifying that the first entry point and a second entry point of the second web page corresponding to the second tab are not present.

According to an embodiment of the disclosure, the determining of the first tab may include identifying a first timing of accessing the first web page and a second timing of accessing the second web page, based on identifying that the first URL information and the second URL information are identical, and determining the first tab as a target to be excluded from the graphic user interface, based on identifying that the first timing precedes the second timing.

According to an embodiment of the disclosure, the determining of the first tab may include identifying a first timing of accessing the first web page and a second timing of accessing the second web page, based on identifying that the first entry point and a second entry point of the second web page corresponding to the second tab are identical, and determining the first tab as a target to be excluded from the graphic user interface, based on identifying that the first timing precedes the second timing.

According to an embodiment of the disclosure, the determining of the first tab may include determining the first tab as a target to be excluded from the graphic user interface, based on identifying that the first tab is in a first state of not being locked.

According to an embodiment of the disclosure, the determining of the first tab may include determining the first tab as a target to be excluded from the graphic user interface, based on identifying that the first tab is in a second state of not being grouped with at least one third tab.

According to an embodiment of the disclosure, the determining of the first tab may include identifying the first entry point, based on identifying that the first tab is in a third state of being grouped with at least one third tab.

According to an embodiment of the disclosure, the determining of the first tab may include identifying first URL information of the first web page and third URL information of at least one third web page, based on identifying that the first entry point and a third entry point of the at least one third web page corresponding to the at least one third tab are not present.

According to an embodiment of the disclosure, the determining of the first tab may include identifying a first timing of accessing the first web page and a third timing of accessing the at least one third web page, based on identifying that the first URL information and the third URL information are identical, and determining the first tab as a target to be excluded from the graphic user interface, based on identifying that the first timing precedes the third timing.

According to embodiments of the disclosure, at the occurrence of an execution event of a web-based application, a process of providing a tab to be excluded from a graphic user interface of the application may be provided.

In addition, according to embodiments of the disclosure, redundant data residing (or loaded) in a memory of an electronic device may be removed when the application is executed, thereby achieving effective management of the memory and improving a response rate of the electronic device regarding operating the application.

In addition, according to embodiments of the disclosure, a graphic user interface of an application is displayed by excluding some of tabs to be provided redundantly, thereby improving user experience regarding operating the application.

Advantages acquired in the disclosure are not limited to the aforementioned advantages, and other advantages not mentioned herein may be clearly understood by those skilled in the art to which the disclosure pertains from the following descriptions.

In the disclosure, a function or operation performed by an electronic device may be performed by at least one processor executing at least one instruction stored in a memory. The function or operation of the electronic device mentioned in the disclosure may be performed by one processor executing at least one instruction, or may be performed by a combination of multiple processors executing one instruction. It may be understood that the processor mentioned in this disclosure includes a circuit for controlling other components of the electronic device. For example, the at least one processor may include a Central Processing Unit (CPU), a Micro-Processor Unit (MPU), an Application Processor (AP), a Communication Processor (CP), or a Neural Processing Unit (NPU), a System on Chip (SoC), or an Integrated Circuit (IC), which is configured to execute at least one instruction. The at least one processor may be configured to perform the operation of the electronic device described above.

In the disclosure, programs (e.g., software modules or software) may be stored in a random access memory and/or a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), other forms of optical storage devices, or a magnetic cassette. Alternatively, the programs may be stored in a memory configured in combination of all or some of these storage media. The memory may be constructed of a single storage medium or a combination of a plurality of storage media. The at least one instruction may be stored in the single storage medium, or may be stored in the plurality of storage media in a distributed manner.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory which stores instructions; and
at least one processor,
wherein the instructions, when executed by the at least one processor, cause the electronic device to:
detect an execution event of an application which supports a web-based interface;
obtain, from the memory, history information on a plurality of web pages accessed through the application, wherein the history information includes information on a first tab corresponding to a first web page and information on a second tab corresponding to a second web page;
determine that the first tab is to be excluded from a graphic user interface of the application which indicates a history accessed through the application, based on the information on the first tab and the information on the second tab; and
display the graphic user interface in which the second tab is included and the first tab is excluded.

2. The electronic device of claim 1, wherein the instructions, when executed by the at least one processor, cause the electronic device to identify a first entry point of the first web page corresponding to the first tab, wherein the first entry point indicates an access path for a plurality of web pages including the first web page.

3. The electronic device of claim 2, wherein the instructions, when executed by the at least one processor, cause the electronic device to:
identify first Uniform Resource Location (URL) information of the first web page and second URL information of the second web page, based on identifying that the first entry point and a second entry point of the second web page corresponding to the second tab are not present;
identify a first timing of accessing the first web page and a second timing of accessing the second web page, based on identifying that the first URL information and the second URL information are identical; and
determine the first tab as a target to be excluded from the graphic user interface, based on identifying that the first timing precedes the second timing.

4. The electronic device of claim 2, wherein the instructions, when executed by the at least one processor, cause the electronic device to:
identify a first timing of accessing the first web page and a second timing of accessing the second web page, based on identifying that the first entry point and a second entry point of the second web page corresponding to the second tab are identical; and
determine the first tab as a target to be excluded from the graphic user interface, based on identifying that the first timing precedes the second timing.

5. The electronic device of claim 1, wherein the instructions, when executed by the at least one processor, cause the electronic device to determine the first tab as a target to be excluded from the graphic user interface, based on identifying that the first tab is in a first state of not being locked.

6. The electronic device of claim 1, wherein the instructions, when executed by the at least one processor, cause the electronic device to determine the first tab as a target to be excluded from the graphic user interface, based on identifying that the first tab is in a second state of not being grouped with at least one third tab.

7. The electronic device of claim 2, wherein the instructions, when executed by the at least one processor, cause the electronic device to identify the first entry point, based on identifying that the first tab is in a third state of being grouped with at least one third tab.

8. The electronic device of claim 7, wherein the instructions, when executed by the at least one processor, cause the electronic device to:
identify first URL information of the first web page and third URL information of at least one third web page, based on identifying that the first entry point and a third entry point of the at least one third web page corresponding to the at least one third tab are not present;
identify a first timing of accessing the first web page and a third timing of accessing the at least one third web page, based on identifying that the first URL information and the third URL information are identical; and
determine the first tab as a target to be excluded from the graphic user interface, based on identifying that the first timing precedes the third timing.

9. An application execution method comprising:
detecting an execution event of an application which supports a web-based interface;
obtaining, from memory of an electronic device, history information on a plurality of web pages accessed through the application, wherein the history information includes information on a first tab corresponding to a first web page and information on a second tab corresponding to a second web page;
determining that the first tab is to be excluded from a graphic user interface of the application which indicates a history accessed through the application, based on the information on the first tab and the information on the second tab; and
displaying the graphic user interface in which the second tab is included and the first tab is excluded.

10. The application execution method of claim 9, wherein the determining of the first tab comprises identifying a first entry point of the first web page corresponding to the first tab, wherein the first entry point indicates an access path for a plurality of web pages including the first web page.

11. The application execution method of claim 10, wherein the determining of the first tab comprises:
identifying first Uniform Resource Location (URL) information of the first web page and second URL information of the second web page, based on identifying that the first entry point and a second entry point of the second web page corresponding to the second tab are not present;
identifying a first timing of accessing the first web page and a second timing of accessing the second web page, based on identifying that the first URL information and the second URL information are identical; and
determining the first tab as a target to be excluded from the graphic user interface, based on identifying that the first timing precedes the second timing.

12. The application execution method of claim 10, wherein the determining of the first tab comprises:
identifying a first timing of accessing the first web page and a second timing of accessing the second web page, based on identifying that the first entry point and a second entry point of the second web page corresponding to the second tab are identical; and
determining the first tab as a target to be excluded from the graphic user interface, based on identifying that the first timing precedes the second timing.

13. The application execution method of claim 9, wherein the determining of the first tab comprises at least one of:
determining the first tab as a target to be excluded from the graphic user interface, based on identifying that the first tab is in a first state of not being locked; and
determining the first tab as a target to be excluded from the graphic user interface, based on identifying that the first tab is in a second state of not being grouped with at least one third tab.

14. The application execution method of claim 10, wherein the determining of the first tab comprises identifying the first entry point, based on identifying that the first tab is in a third state of being grouped with at least one third tab.

15. The application execution method of claim 14, wherein the determining of the first tab comprises:
identifying first URL information of the first web page and third URL information of at least one third web page, based on identifying that the first entry point and a third entry point of the at least one third web page corresponding to the at least one third tab are not present;
identifying a first timing of accessing the first web page and a third timing of accessing the at least one third web page, based on identifying that the first URL information and the third URL information are identical; and
determining the first tab as a target to be excluded from the graphic user interface, based on identifying that the first timing precedes the third timing.
